# EUROPÄISCHE PATENTSCHRIFT

(11) **EP 2 173 988 B1**
(45) Veröffentlichungstag und Bekanntmachung des Hinweises auf die Patenterteilung: **13.06.2018**
(21) Anmeldenummer: 08775256.4
(22) Anmeldetag: 21.07.2008
(51) Int. Cl.: F02B 75/04, H02K 7/18

(54) **FREIKOLBENVORRICHTUNG UND VERFAHREN ZUR STEUERUNG UND/ODER REGELUNG EINER FREIKOLBENVORRICHTUNG**
FREE-PISTON DEVICE AND METHOD FOR CONTROLLING AND/OR REGULATING A FREE-PISTON DEVICE
DISPOSITIF À PISTON LIBRE ET PROCÉDÉ DE COMMANDE ET/OU DE RÉGLAGE D'UN DISPOSITIF À PISTON LIBRE

(30) Priorität: 23.07.2007 DE 102007035914
(43) Veröffentlichungstag der Anmeldung: 14.04.2010
(73) Patentinhaber: UMC Universal Motor Corporation GmbH, 70565 Stuttgart (DE)
(72) Erfinder: GRÄF, Jürgen, 86163 Augsburg (DE)
(74) Vertreter: Witte, Weller & Partner Patentanwälte mbB
(86) Internationale Anmeldenummer: PCT/EP2008/059531
(87) Internationale Veröffentlichungsnummer: WO 2009/013270

(56) Entgegenhaltungen:
- EP-A1- 1 398 863
- WO-A-01/45977
- WO-A-03/091556
- DE-A1- 4 344 915
- GB-A- 854 255
- US-A- 1 167 366
- US-A- 3 500 804
- US-A- 4 454 426
- US-A- 5 287 827

## Beschreibung

Die Erfindung betrifft eine Freikolbenvorrichtung, umfassend mindestens eine Kolbenaufnahme, mindestens eine in der entsprechenden Kolbenaufnahme linear bewegliche Kolbeneinrichtung mit einer ersten Kolbenfläche und einer zweiten Kolbenfläche, welche der ersten Kolbenfläche abgewandt ist, und einen in der Kolbenaufnahme gebildeten Expansionsraum, welcher durch die erste Kolbenfläche begrenzt ist, wobei die Kolbeneinrichtung unter der Wirkung eines Mediums, welches im Expansionsraum expandiert, antreibbar ist.

Die Erfindung betrifft ferner ein Verfahren zur Steuerung und/oder Regelung einer Freikolbenvorrichtung, welche eine Kolbenaufnahme, eine in der Kolbenaufnahme linear bewegliche Kolbeneinrichtung und einen Rückfederraum aufweist.

Über eine Freikolbenvorrichtung lässt sich beispielsweise chemische Energie über Verbrennung teilweise in mechanische Energie, nämlich kinetische Energie einer Kolbeneinrichtung, umwandeln, und diese mechanische Energie lässt sich dann wiederum über einen Lineartrieb zumindest teilweise in elektrische Energie umwandeln. Durch eine Ausgestaltung der Kolbenbewegung als Freikolbenbewegung lässt sich eine reine Linearbeweglichkeit der Kolben realisieren, ohne dass eine Kurbelwelle vorgesehen werden muss.

Entsprechende Vorrichtungen können beispielsweise als Teil von Hybridantrieben für Kraftfahrzeuge eingesetzt werden und insbesondere im Zusammenhang mit seriellen Hybridkonzepten. Sie lassen sich auch als kompakte Stromerzeugungseinheit zur Generierung von Strom einsetzen oder auch im Zusammenhang mit stationären Anwendungen wie beispielsweise Blockheizkraftwerken einsetzen.

Freikolbenvorrichtungen sind beispielsweise aus der GB 854 255 und der DE 22 17 194 C3 bekannt.

Verbrennungsvorrichtungen mit elektrischen Generatoren sind auch aus der US 6,199,519 B1, der DE 31 03 432 A1, der DDR-Patentschrift Nr. 113 593, der DE 43 44 915 A1 oder aus dem Artikel "Advanced internal combustion engine research" von P. van Barrigan, Proceedings of the 2000 DOE Hydrogene Program Review, bekannt.

Aus der DE 102 19 549 B4 ist eine Freikolbenvorrichtung mit elektrischem Lineartrieb bekannt, welche mindestens eine Kolbenaufnahme mit mindestens einer in der Kolbenaufnahme linear beweglich angeordneten Kolbeneinrichtung umfasst, wobei die Kolbeneinrichtung eine Läufervorrichtung umfasst und an der Kolbenaufnahme eine Statorvorrichtung angeordnet ist. Die mindestens eine Kolbeneinrichtung ist unter der Wirkung eines Mediums, welches in einem Expansionsraum expandiert, antreibbar, wobei der Kolbenhub über den Lineartrieb derart variabel einstellbar ist, dass die Totpunkte der Bewegung der Kolbeneinrichtung definierbar sind.

Eine weitere Freikolbenvorrichtung mit elektrischem Lineartrieb ist in der WO 01/45977 A2 beschrieben.

Aus der EP 1 398 863 A1 ist eine Freikolbenvorrichtung bekannt, bei welcher ein erster Verschiebungsraum, in welchem ein Kolben in der mindestens einen Kolbeneinrichtung, auf die das Medium wirkt, beweglich ist, und ein zweiter Verschiebungsraum, in welchem die zugeordnete Läufervorrichtung beweglich ist, getrennte Räume sind.

Aus der DE 197 81 913 T1 ist ein Verfahren zur Steuerung der Bewegung eines Lineargenerators bekannt, wobei der Lineargenerator von einem Verbrennungsmotor mit zwei auf einer Achse zueinander ausgerichteten und einander gegenüberliegend angeordneten Kolben angetrieben wird. Die Stromaufnahme wird so gesteuert, dass während eines Hin- und Herbewegungszyklus des Generators eine Widerstandskraft erhalten wird, die mindestens im mittleren Hubbewegungsbereich der Bewegungsgeschwindigkeit des Generators im Wesentlichen proportional auf den Generator wirkt. Es sind Drucksensoren in den Verbrennungsräumen vorgesehen, wobei ein Steuergerät eine Einrichtung für die Zündung des den Verbrennungsräumen zugeführten Gemischs bei Erreichen eines festgelegten Drucks auslöst.

Eine Freikolbenvorrichtung mit elektrischem Lineartrieb ist aus der DE 10 2004 062 440 B4 bekannt. Die Freikolbenvorrichtung weist einen Rückfederraum auf, in dem ein Gas aufgenommen ist. An dem Rückfederraum ist mindestens ein Drucksensor vorgesehen, mit dem sich durch Messung des Drucks des Gases im Rückfederraum die Position und/oder die Geschwindigkeit der Kolbeneinrichtung ermitteln lässt. Über den gemessenen Druck lässt sich damit eine Steuerung und/oder Regelung der Freikolbenvorrichtung durchführen, beispielsweise bezüglich der Einspritzung von Brennstoff in den Expansionsraum, des Zündzeitpunkts von Brennstoff in einem Expansionsraum und/oder von an dem Expansionsraum angeordneten Ventilen.

Aus der US 5,002,020 ist ein Hybridmotor bekannt, welcher einen sich hin- und herbewegenden Kolben und einen elektromagnetischen Aufnehmer zur Steuerung/Regelung und zur Leistungsausgabe umfasst.

Aus der nicht vorveröffentlichten WO 2008/037980 A2 ist ein Freikolbenmotor mit einer Doppelwirkungsanordnung bekannt. Ein Kolben erfährt auf einer Seite einen konventionellen internen Verbrennungszyklus und auf der anderen Seite einen Dampfexpansionszyklus.

Der Erfindung liegt die Aufgabe zugrunde, eine Freikolbenvorrichtung der eingangs genannten Art bereitzustellen, welche sich auf einfache Weise realisieren lässt und welche kompakt aufgebaut ist.

Diese Aufgabe wird bei der eingangs genannten Freikolbenvorrichtung erfindungsgemäß dadurch gelöst, dass die mindestens eine Kolbenaufnahme eine Seite aufweist, aus welcher ein mit der Kolbeneinrichtung verbundenes mindestens eines linear bewegliches Wirkelement herausgeführt ist. An dem Wirkelement lässt sich mechanische Energie "entnehmen", d. h. es können eine oder mehrere Anwendungen an das Wirkelement angekoppelt werden. Es lässt sich dadurch ein modularer Aufbau einer Freikolbenvorrichtung mit einem Antriebsteil und einem insbesondere austauschbaren Anwendungsteil realisieren.

Das mindestens eine Wirkelement ist eine Kolbenstange.

Ein Wirkelement ist durch die mindestens eine Vordruckkammer geführt.

An dem mindestens einen Wirkelement ist mindestens ein Kanal angeordnet, welcher eine erste Öffnung und eine zweite Öffnung aufweist, wobei die Position der ersten Öffnung und/oder der zweiten Öffnung in dem Rückfederraum und/oder einem Vordruckraum einer Vordruckkammer abhängig von der Position des mindestens einen Wirkelements ist. Dadurch lässt sich eine zeitabhängige Steuerung beispielsweise des Druckausgleichs zwischen Vordruckraum und Rückfederraum ermöglichen, ohne dass extern zeitlich gesteuerte Ventile vorhanden sind. Es ist dadurch beispielsweise nicht mehr notwendig, Hochdruckventile einzusetzen.

Durch die erfindungsgemäße Lösung lässt sich die Länge der Kolbenaufnahme optimiert nutzen.

Insbesondere ist es dann beispielsweise möglich, den Abstand zwischen dem Expansionsraum und dem Rückfederraum zu minimieren, wenn dieser Abstand im Wesentlichen der entsprechenden Dicke eines Kolbens entspricht.

Es ist weiterhin möglich, eine Freikolbenvorrichtung modular mit einem Antriebsteil und einem Anwendungsteil aufzubauen. Bei der erfindungsgemäßen Lösung lässt sich ein Wirkelement auf einfache Weise an einem hinteren Ende des Antriebsteils herausführen. Dadurch können Anwendungen wie beispielsweise Verdichter und Lineartriebe modular angekoppelt werden. Es ist dabei eine serielle und/oder parallele Ankopplung mehrerer Anwendungen möglich.

Bei der erfindungsgemäßen Lösung ist es möglich, ein Blowby von dem Expansionsraum in den Rückfederraum zu nutzen. Beim Blowby gelangt Gas aus dem Expansionsraum in den Rückfederraum aufgrund Undichtigkeiten zwischen der Kolbeneinrichtung und der Kolbenaufnahme. Wenn der Rückfederraum als Gasfederraum ausgebildet ist, lässt sich durch den Blowby der Gasdruck im Rückfederraum aufrechterhalten bzw. zur Verminderung des Druckverlusts im Rückfederraum nutzen. Gegebenenfalls kann durch eine definierte Einstellung der "Undichtigkeit" der Blowby definiert eingestellt werden.

Der Rückfederraum ist mit mindestens einer Vordruckkammer fluidwirksam verbunden. Dadurch ist es beispielsweise möglich, den Gasdruck und damit die elastischen Eigenschaften des Rückfederraums zu steuern bzw. zu regeln.

Günstig ist es, wenn der Expansionsraum und der Rückfederraum linear hintereinander angeordnet sind. Dadurch lässt sich ein kompakter Aufbau mit minimierten Längenabmessungen erreichen.

Insbesondere sind der Expansionsraum und der Rückfederraum durch einen Kolben der Kolbeneinrichtung getrennt, wobei der Kolben die erste Kolbenfläche und die zweite Kolbenfläche aufweist. Der Abstand zwischen dem Expansionsraum und dem Rückfederraum ist dadurch minimiert.

Aus dem gleichen Grund ist es günstig, wenn eine Innenlänge der Kolbenaufnahme sich zusammensetzt aus einer Länge des Expansionsraums, eines Abstands zwischen der ersten Kolbenfläche und der zweiten Kolbenfläche und einer Länge des Rückfederraums.

Ein kompakter Aufbau lässt sich realisieren, wenn der Abstand zwischen der ersten Kolbenfläche und der zweiten Kolbenfläche höchstens 30 % der Gesamtinnenlänge der Kolbenaufnahme beträgt.

Es ist vorgesehen, dass die Seite eine Stirnseite ist, welche quer zur Bewegungsrichtung der Kolbeneinrichtung orientiert ist. Dadurch ist auf einfache Weise eine Ankopplungsseite des Antriebsteils bereitgestellt.

An der Seite ist insbesondere eine Wand angeordnet, welche der zweiten Kolbenfläche gegenüberliegt. Dadurch ergibt sich auf einfache Weise eine Auskoppelbarkeit für die mechanische Energie.

Ferner günstig ist es, wenn die Wand den Rückfederraum begrenzt. An dem Rückfederraum ist keine Zufuhr von Brennstoff oder dergleichen notwendig und es muss auch kein Abgas abgeführt werden. Es ergibt sich dadurch ein einfacher Aufbau. Grundsätzlich ist es aber auch möglich, dass das Wirkelement aus einer Wand herausgeführt wird, welche den Expansionsraum begrenzt.

Günstig ist es, wenn die Wand eine Öffnung aufweist, durch welche das mindestens eine Wirkelement geführt ist. Dadurch lässt sich auf einfache Weise die mechanische Energie auskoppeln.

Es ist dann ferner vorteilhaft, wenn an dieser Wand ein Lager für das mindestens eine Wirkelement angeordnet ist. Das Lager ist beispielsweise ein Gleitlager für die Verschiebungsführung des Wirkelements. Dadurch lässt sich dessen Gesamtlagerung verbessern.

Es ist vorgesehen, dass das mindestens eine Wirkelement im Teilbereich durch den Rückfederraum geführt ist. Dadurch ergibt sich ein einfacher Aufbau bei einfacher Auskopplungsmöglichkeit für mechanische Energie. Wie oben erwähnt ist es aber auch grundsätzlich möglich, dass das mindestens eine Wirkelement durch den Expansionsraum geführt ist.

Ganz besonders vorteilhaft ist es, wenn das mindestens eine Wirkelement eine Kupplung zur Einkopplung einer Anwendung aufweist. Dadurch lässt sich auf einfache Weise eine Anwendung anschließen, um die mechanische Energie des Antriebsteils zu nutzen.

Günstig ist es, wenn dem Expansionsraum mindestens eine Einlassöffnung zugeordnet ist. Dadurch lässt sich ein Brennstoff einkoppeln bzw. es lässt sich ein entspannbares Wärmeträgermedium einkoppeln.

Insbesondere ist an der mindestens einen Einlassöffnung ein vorzugsweise steuerbares Ventil angeordnet, um die Einfuhr von Brennstoff bzw. von entspannbarem Wärmeträgermedium steuern zu können.

Wenn dem Expansionsraum mindestens eine Auslassöffnung zugeordnet ist, dann können beispielsweise Verbrennungsabgase abgeführt werden bzw. entspanntes Wärmeträgermedium kann abgeführt werden.

Es ist dann entsprechend günstig, wenn an der Auslassöffnung ein (steuerbares) Ventil angeordnet ist.

Es ist insbesondere günstig, wenn der Rückfederraum ein Gasfederraum ist, in welchem ein kompressibles Medium aufgenommen ist. Das kompressible Medium (Gas) steht unter Druck in dem Gasfederraum. Dadurch lässt sich eine Hin- und Herbewegung der Kolbeneinrichtung bewirken. Es ist ferner möglich, wie in der WO 03/091556 A1 beschrieben, die Bewegung der Kolbeneinrichtung zu steuern.

Es ist dann günstig, wenn eine Steuerungseinrichtung zur Steuerung der Verbindung vorgesehen ist, um beispielsweise den Druck im Rückfederraum einstellen zu können.

Bei einem Ausführungsbeispiel ist die mindestens eine Vordruckkammer über eine Stirnseite der Kolbenaufnahme mit dem Rückfederraum verbunden. Es ergibt sich dadurch eine lineare Hintereinanderschaltung der Kolbenaufnahme und der Vordruckkammer.

Es ist grundsätzlich auch möglich, dass die mindestens eine Vordruckkammer beabstandet zu einem Wirkelement angeordnet ist.

Insbesondere sind in einer oder mehreren Positionen der Kolbeneinrichtung die Vordruckkammer und der Rückfederraum mit dem Kanal in fluidwirksamer Weise verbunden. Dadurch ist dann ein Druckausgleich ermöglicht.

Es kann dabei vorgesehen sein, dass die Position oder Positionen an einem Umkehrpunkt oder in der Nähe eines Umkehrpunkts der Kolbeneinrichtung liegen. Durch Ausbildung des Kanals und der Öffnungen ist dabei grundsätzlich einstellbar, ob es sich um den oberen Umkehrpunkt oder den unteren Umkehrpunkt handelt.

Es kann vorgesehen sein, dass in der Vordruckkammer (mindestens) eine Anwendung angeordnet ist. Über einen Vordruckraum der Vordruckkammer lässt sich Druck in dem Rückfederraum einstellen. Es lässt sich ein Gehäuse, in welchem eine Anwendung wie ein Lineartrieb angeordnet ist, zur Bildung der Vordruckkammer nutzen. Dadurch ergibt sich eine kompakte Bauweise unter Minimierung der Gesamtlänge der Freikolbenvorrichtung.

Es ist beispielsweise vorgesehen, dass an die Kolbeneinrichtung mindestens ein Lineartrieb anschließbar oder angeschlossen ist. Der Lineartrieb ist beispielsweise als Lineargenerator ausgebildet. Es lässt sich dann elektrischer Strom erzeugen. Es ist auch grundsätzlich möglich, über den Lineartrieb die Bewegung der Kolbeneinrichtung zu steuern, wie es in der WO 03/091556 A1 beschrieben ist.

Der mindestens eine Lineartrieb weist dabei einen Stator und einen Aktor auf, welche mit dem mindestens einen Wirkelement der Kolbeneinrichtung verbunden sind. Die Kolbeneinrichtung stellt die mechanische Energie bereit, um Induktionsströme zu generieren.

Beispielsweise folgt der mindestens eine Lineartrieb in einer Richtung parallel zur Bewegungsrichtung der Kolbeneinrichtung auf die Kolbenaufnahme. Dadurch lassen sich beispielsweise geringe Querabmessungen erreichen.

Es ist auch möglich, dass der mindestens eine Lineartrieb die mindestens eine Kolbenaufnahme und/oder eine Vordruckkammer mindestens teilweise umgibt. Dadurch lassen sich die Längenabmessungen gering halten.

Beispielsweise ist es auch möglich, dass an die Kolbeneinrichtung mindestens ein Verdichter anschließbar oder angeschlossen ist. Durch den Verdichter wird beispielsweise ein Gas oder eine Flüssigkeit verdichtet.

Insbesondere ist eine Kolbenstange des mindestens einen Verdichters mit einem Wirkelement der Kolbeneinrichtung verbunden.

Bei der Freikolbenvorrichtung, welche eine Kolbenaufnahme, eine in der Kolbenaufnahme linear bewegliche Kolbeneinrichtung und einen Rückfederraum umfasst wird, die Fluidverbindung zwischen dem Rückfederraum und einem Vordruckraum in Abhängigkeit von der Position der Kolbeneinrichtung geöffnet oder geschlossen, wobei eine oder mehrere Kolbenstangen der Kolbeneinrichtung in dem Rückfederraum und dem Vordruckraum geführt werden und an der mindestens einen Kolbenstange mindestens ein Kanal angeordnet ist mit einer ersten Öffnung und einer zweiten Öffnung.

Bei dem Verfahren wird der Druck im Rückfederraum automatisch über die Position der Kolbeneinrichtung gesteuert bzw. geregelt. Beispielsweise wird der Druck in dem Vordruckraum als Arbeitspunkt gesetzt und es kann ein automatischer Druckausgleich erfolgen. Es sind dann zur Steuerung bzw. Regelung des Drucks im Rückfederraum keine Hochdruckventile mehr notwendig. Es ist auch keine externe zeitliche Ansteuerung mehr notwendig, da diese Steuerung durch die Position der Kolbeneinrichtung "von selbst" erfolgt.

Insbesondere stehen die erste Öffnung und die zweite Öffnung in fluidwirksamer Verbindung. Dadurch kann durch den Kanal hindurch ein Gasaustausch erfolgen.

Insbesondere gibt es eine oder mehrere Stellungen der Kolbeneinrichtung, bei welcher die erste Öffnung im Rückfederraum liegt und die zweite Öffnung im Vordruckraum. Es kann dann ein Gasausgleich zwischen Rückfederraum und Vordruckraum erfolgen und über diesen Gasausgleich kann insbesondere der Druck im Rückfederraum gesteuert bzw. geregelt werden.

Es ist ferner günstig, wenn es eine oder mehrere Stellungen der Kolbeneinrichtung gibt, bei denen sowohl die erste Öffnung als auch die zweite Öffnung entweder im Rückfederraum oder im Vorraum liegen. Es kann kein Gasaustausch zwischen Vordruckraum und Rückfederraum erfolgen.

Die nachfolgende Beschreibung bevorzugter Ausführungsformen dient im Zusammenhang mit den Zeichnungen der näheren Erläuterung der Erfindung. Es zeigen:
- Figur 1: eine schematische Schnittdarstellung eines Beispiels einer Freikolbenvorrichtung;
- Figur 2: eine schematische Darstellung eines Beispiels einer Freikolbenvorrichtung;
- Figur 3: eine schematische Darstellung eines ersten Ausführungsbeispiels einer erfindungsgemäßen Freikolbenvorrichtung;
- Figur 4: eine schematische Darstellung eines Beispiels einer Freikolbenvorrichtung;
- Figur 5: eine schematische Darstellung eines Beispiels einer Freikolbenvorrichtung;
- Figur 6: eine schematische Darstellung eines Beispiels einer Freikolbenvorrichtung;
- Figur 7: eine schematische Darstellung eines zweiten Ausführungsbeispiels einer erfindungsgemäßen Freikolbenvorrichtung;
- Figur 8: eine schematische Darstellung eines Beispiels;
- Figur 9: eine schematische Darstellung eines Beispiels; und
- Figur 10: eine schematische Darstellung eines Beispiels.

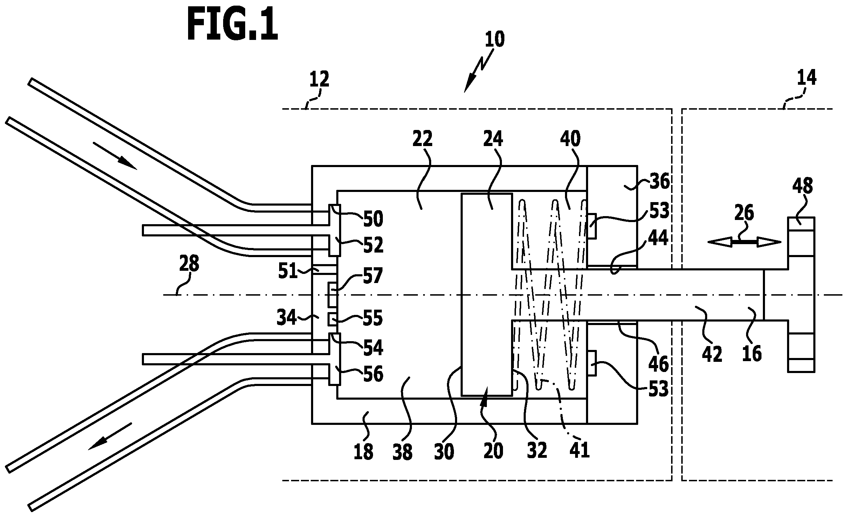

Ein Beispiel einer Freikolbenvorrichtung, welche in Figur 1 gezeigt und dort mit 10 bezeichnet ist, umfasst einen Antriebsteil 12 und einen Anwendungsteil 14. Der Antriebsteil 12 stellt mechanische Energie in Form eines hin- und herbewegten Wirkelements 16 bereit. Diese mechanische Energie kann, wie unten noch erläutert wird, an dem Anwendungsteil 14 durch eine entsprechende Anwendung wie einen Verdichter und/oder einen Lineartrieb aufgenommen werden.

Der Antriebsteil 12 umfasst (mindestens) eine Kolbenaufnahme 18 (Zylinder), in der eine Kolbeneinrichtung 20 linearbeweglich angeordnet ist.

Die Kolbenaufnahme 18 hat einen Kolbenraum 22, in welchem ein Kolben 24 der Kolbeneinrichtung 20 in einer Richtung/Gegenrichtung 26 linearbeweglich ist. Die Richtung/Gegenrichtung 26 ist parallel zu einer Längsachse 28 der Kolbenaufnahme 18.

Der Kolben 24 hat eine erste Kolbenfläche 30 und eine gegenüberliegende zweite Kolbenfläche 32. Die erste Kolbenfläche 30 und die zweite Kolbenfläche 32 sind beispielsweise parallel zueinander. Bei einer Ausführungsform liegt zwischen der ersten Kolbenfläche 30 und der zweiten Kolbenfläche 32 beispielsweise Vollmaterial des Kolbens 24.

Alternativ kann der Kolben 24 einen oder mehrere Hohlräume zwischen der ersten Kolbenfläche 30 und der zweiten Kolbenfläche 32 aufweisen. Ein Hohlraum dient beispielsweise zur Massenverringerung und/oder thermischen Entkopplung. Ein Hohlraum lässt sich grundsätzlich auch zur internen Kühlung des Kolbens 24 nutzen.

Der Kolbenraum 22 ist an einer ersten Stirnseite durch eine erste Stirnwand 34 begrenzt und an einer gegenüberliegenden zweiten Stirnseite durch eine zweite Stirnwand 36 begrenzt. Die erste Stirnwand 34 und die zweite Stirnwand 36 sind quer zu der Längsrichtung 28 und damit auch zu der Bewegungsrichtung 26 orientiert.

Zwischen der ersten Stirnwand 34 und der ersten Kolbenfläche 30 liegt ein Expansionsraum 38, in dem ein Expansionsmedium expandieren kann und dabei eine Kraft auf den Kolben 24 ausüben kann.

Zwischen der zweiten Kolbenfläche 32 und der zweiten Stirnwand 36 ist ein Rückfederraum 40 gebildet, welcher beispielsweise als Gasfederraum ausgebildet ist. In dem Rückfederraum 40 ist dann ein komprimierbares Medium und insbesondere Gas aufgenommen. Dieses komprimierbare Medium sorgt für eine Rückfederung des Kolbens 24.

Alternativ oder zusätzlich können in dem Rückfederraum 40 ein oder mehrere mechanische Federelemente 41 angeordnet sein. Mindestens ein Federelement 41 ist an dem Kolben 22 angelenkt und stützt sich direkt oder vermittelt an der zweiten Stirnwand 36 ab.

Das Gesamtvolumen des Kolbenraums 22 setzt sich zusammen aus der Summe der Volumina des Expansionsraums 38, des Rückfederraums 40 und des Volumens des Kolbens 24. Das Verhältnis der Volumina des Expansionsraums 38 zu dem Rückfederraum 40 ist abhängig von der Stellung des Kolbens 24 der Kolbeneinrichtung 20. Der Kolben 24 ist in dem Kolbenraum 22 so angeordnet und geführt, dass der Expansionsraum 38 und der Rückfederraum 40 zueinander gasdicht abgedichtet sind.

Grundsätzlich ist aufgrund Dichtungstoleranzen ein Blowby zwischen dem Expansionsraum 38 und dem Rückfederraum 40 möglich. Das von dem Expansionsraum 38 in den Rückfederraum 40 gelangte Fluid (insbesondere Gas) wird in dem Rückfederraum 40 als elastisches Medium genutzt. Der Blowby lässt sich zur Erhaltung des Drucks bzw. Verminderung des Druckverlusts im Rückfederraum 40 nutzen. Dadurch lässt sich unter Umständen auf eine stationäre Pumpe zur Aufrechterhaltung des Drucks im Rückfederraum 40 verzichten und die Freikolbenvorrichtung so kompakt und kostengünstig realisieren.

Die Kolbeneinrichtung 20 weist eine Kolbenstange 42 auf, welche an dem Kolben 24 sitzt und durch den Rückfederraum 40 geführt ist. Die zweite Stirnwand 36 weist eine Öffnung 44 auf, durch die die (gasdichte) Kolbenstange 42 geführt ist. An der Öffnung 44 ist eine Lagereinrichtung 46 beispielsweise in Form eines Gleitlagers angeordnet, um die Kolbenstange 42 und damit die Kolbeneinrichtung 20 in ihrer Linearbewegung in der Richtung/Gegenrichtung 26 zu lagern.

Bei dem in Figur 1 gezeigten Ausführungsbeispiel ist der Rückfederraum 40 gegenüber dem Außenraum abgedichtet, so dass das komprimierbare Medium in dem Rückfederraum 40 durch die Öffnung 44 nicht nach außen dringen kann.

Die Kolbenstange 42 bildet das Wirkelement 16. An der Kolbenstange 42 ist bevorzugterweise an ihrem äußeren Ende eine Kupplung 48 angeordnet, an die eine Anwendung zum Abgreifen der bereitgestellten mechanischen Energie ankoppelbar ist.

Die zweite Stirnwand 36 bildet das äußere Ende des Antriebsteils 12 oder liegt in der Nähe des äußeren stirnseitigen Endes des Antriebsteils 12. Anwendungen lassen sich dann auf den Antriebsteil 12 in der Längsrichtung 18 folgend anschließen; sie lassen sich gewissermaßen mit dem Antriebsteil 12 hintereinander schalten.

Der Rückfederraum 40 ist in der gleichen Kolbenaufnahme 18 gebildet wie der Expansionsraum 38. Der Kolben 24 bildet die Trenneinrichtung für den Expansionsraum 38 und den Rückfederraum 40.

Die erste Kolbenfläche 30 ist beispielsweise kreisförmig. Die zweite Kolbenfläche 32 ist beispielsweise ringförmig.

An das Antriebsteil 12 sind modulartig ein oder mehrere Anwendungsteile 14 anschließbar, welche die durch das Antriebsteil 12 bereitgestellte mechanische Energie nutzen.

In dem gleichen Kolbenraum sind der Expansionsraum 38 und der Rückfederraum 40 gebildet. Dadurch lässt sich die Kolbenaufnahme 18 kompakt aufbauen mit relativ geringen Längenabmessungen in Richtung der Längsachse 28.

Die oszillierende Verschiebungsbewegung (in der Richtung/Gegenrichtung 26) des Wirkelements 16 wird durch expandierende Gase in dem Expansionsraum 38 angetrieben.

Bei einer Ausführungsform handelt es sich bei dem expandierenden Medium in dem Expansionsraum 38 um Verbrennungsgase. An der Kolbenaufnahme 18 ist für den Expansionsraum 38 (mindestens) eine Einlassöffnung 50 angeordnet, über die ein Brennstoff bzw. Brennstoff-Oxidator-Gemisch in den Expansionsraum 38 einkoppelbar ist. Es ist grundsätzlich möglich, dass für Brennstoff und Oxidator getrennte Einlassöffnungen vorgesehen sind. An der Einlassöffnung 50 ist ein Ventil 52 angeordnet, welches insbesondere steuerbar ist. Über das Ventil 52 lässt sich die Einkopplung von Brennstoff bzw. Brennstoff-Oxidator-Gemisch steuern.

Ferner ist an der Kolbenaufnahme 18 (mindestens) eine Auslassöffnung 54 angeordnet, über die Medium aus dem Expansionsraum 38 abführbar ist. Insbesondere ist Abgas aus dem Expansionsraum 38 abführbar.

An der Auslassöffnung 54 ist ein Ventil 56 angeordnet, um eine gesteuerte Abführung zu ermöglichen.

Dem Expansionsraum 38 kann eine Zündeinrichtung 57 zur Zündung eines Brennstoff-Oxidator-Gemisches zugeordnet sein. Auch selbstzündende Medien können grundsätzlich verwendet werden.

Bei einer Variante einer Ausführungsform ist das in dem Expansionsraum 38 expandierende Medium ein Wärmeträgermedium, welches außerhalb des Expansionsraums 38 erzeugt bzw. erhitzt wurde. Dieses Wärmeträgermedium kann sich in dem Expansionsraum 38 entspannen und dadurch den Kolben 24 in seiner Oszillationsbewegung antreiben.

In diesem Falle dient die Einlassöffnung 50 dazu, entspannbares Wärmeträgermedium in den Expansionsraum 38 gesteuert einzukoppeln. Über die Auslassöffnung 54 lässt sich "entspanntes" Wärmeträgermedium abführen.

Zur Messung des Drucks in dem Rückfederraum 40 können dem Rückfederraum ein oder mehrere Drucksensoren 53 zugeordnet sein. Der oder die Drucksensoren 53 sind beispielsweise an der zweiten Stirnwand 36 angeordnet.

Ebenso können dem Expansionsraum 38 ein oder mehrere Drucksensoren 55 zugeordnet sein, welche zur Messung des Drucks in dem Expansionsraum dienen. Der oder die Drucksensoren sind insbesondere an der ersten Stirnwand 34 angeordnet.

Weiterhin kann dem Expansionsraum 38 mindestens ein Einspritzventil 51 zugeordnet sein, über welches beispielsweise Brennstoff einspritzbar ist.

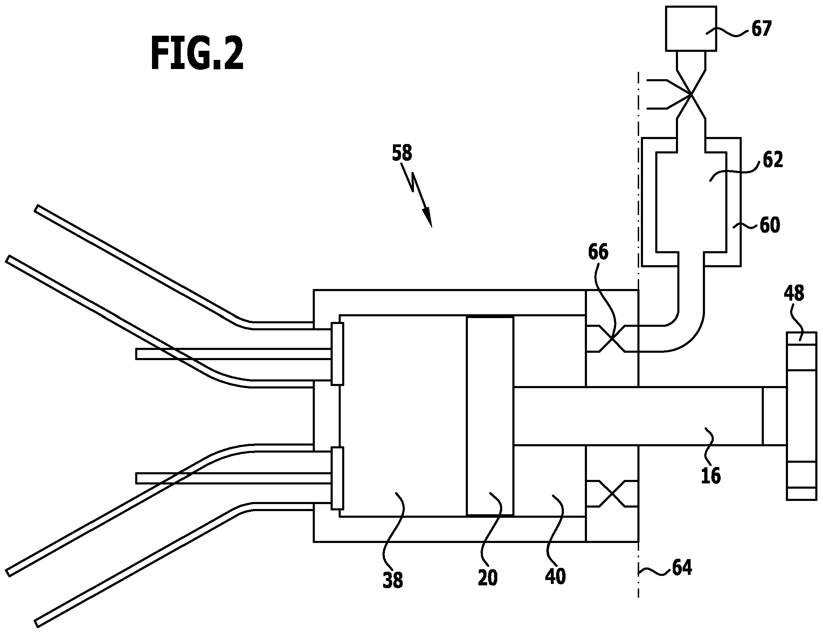

Ein Beispiel einer Freikolbenvorrichtung, welches in Figur 2 gezeigt und dort mit 58 bezeichnet ist, ist grundsätzlich gleich ausgebildet wie die erste Freikolbenvorrichtung 10. Für gleiche Elemente werden deshalb gleiche Bezugszeichen verwendet.

Zusätzlich ist dem Rückfederraum 40 (mindestens) eine Vordruckkammer 60 mit einem Vordruckraum 62 zugeordnet. Die Vordruckkammer 60 ist beabstandet zu dem Wirkelement 16 angeordnet. Sie ist beispielsweise hinter einem durch eine zweite Stirnseite 64 definierten Ende angeordnet. Der Vordruckraum 62 ist fluidwirksam mit dem Rückfederraum 40 über ein steuerbares Ventil 66 verbunden. Über die Vordruckkammer 60 lässt sich beispielsweise der Druck der Gasfeder im Rückfederraum 40 einstellen. Insbesondere lässt sich dieser Druck steuern bzw. regeln und so an den speziellen Betriebsmodus der Freikolbenvorrichtung 58 anpassen.

Bei einer Ausführungsform wird der Druck im unteren Totpunkt der Gasfeder des Rückfederraums 40 gesteuert. Im unteren Totpunkt (UT) des Rückfederraums 40 hat der Rückfederraum 40 sein größtes Volumen und die Drucksteuerung/-regelung ist am einfachsten.

An den Vordruckraum 62 ist eine Pumpe 67 angeschlossen, welche zur Druckbeaufschlagung der Vordruckkammer 60 dient.

Beispielsweise ist es über die Vordruckkammer 60 auch möglich, Druckverluste im Rückfederraum 40 auszugleichen.

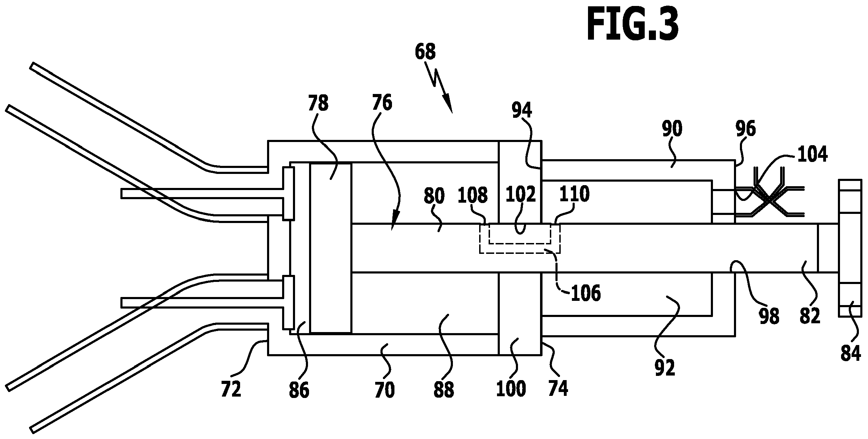

Ein erstes Ausführungsbeispiel einer erfindungsgemäßen Freikolbenvorrichtung, welche in Figur 3 gezeigt und dort mit 68 bezeichnet ist, umfasst eine Kolbenaufnahme 70 mit einer ersten Stirnseite 72 und einer zweiten Stirnseite 74. In der Kolbenaufnahme 70 ist eine Kolbeneinrichtung 76 mit einem Kolben 78 und einer Kolbenstange 80 linear beweglich. Die Kolbenstange 80 bildet ein Wirkelement 82, durch welches an eine Anwendung mechanische Oszillationsenergie übertragbar ist. An einem Ende des Wirkelements 82 ist eine Kupplung 84 zur Ankopplung der Anwendung angeordnet.

Die Kolbenaufnahme 70 umfasst einen Expansionsraum 86 und einen Rückfederraum 88, welche grundsätzlich auf die gleiche Weise ausgebildet sind und funktionieren wie oben beschrieben.

An der zweiten Stirnseite 74 ist eine Vordruckkammer 90 angeordnet, in welcher ein Vordruckraum 92 gebildet ist. Eine erste Stirnseite 94 der Vordruckkammer weist der zweiten Stirnseite 74 der Kolbenaufnahme 70 zu und liegt beispielsweise an dieser an oder fällt mit dieser zusammen. Eine zweite Stirnseite 96 ist der zweiten Stirnseite 74 der Kolbenaufnahme 70 abgewandt.

Die Vordruckkammer 90 und die Kolbenaufnahme 70 sind hintereinander geschaltet angeordnet. Die Vordruckkammer 90 schließt sich der Kolbenaufnahme 70 parallel zu der Bewegungsrichtung der Kolbeneinrichtung 76 an.

An der zweiten Stirnseite 96 in einer entsprechenden Stirnwand weist die Vordruckkammer 90 eine Öffnung 98 auf, durch die das Wirkelement 82 geführt ist. An der Öffnung 98 ist insbesondere eine Lagereinrichtung wie ein Gleitlager zur Lagerführung des Wirkelements 82 angeordnet. Die Lagereinrichtung und das Wirkelement 82 sind zu dem Außenraum hin abgedichtet.

An der zweiten Stirnseite 74 der Kolbenaufnahme 70 ist an einer entsprechenden Stirnwand 100 eine Öffnung 102 angeordnet, durch welche ebenfalls das Wirkelement 82 geführt ist. Insbesondere ist eine Lagereinrichtung wie ein Gleitlager angeordnet. Die Öffnung 98 liegt dabei zwischen dem Rückfederraum 88 und dem Vordruckraum 92 der Vordruckkammer. Die Öffnung 98 ist bezüglich des Wirkelements 82 so abgedichtet, dass kein Gasaustausch über die Öffnung 98 zwischen dem Außenraum und dem Vordruckraum 92 erfolgen kann.

Die Vordruckkammer 90 weist eine oder mehrere Öffnungen 104 auf, über welche eine Drucksteuerung in dem Vorraum 92 ermöglicht wird.

An dem Wirkelement 82 ist (mindestens) ein Kanal 106 angeordnet, welcher eine erste Öffnung 108 und eine zweite Öffnung 110 zu einer Außenseite des Wirkelements 82 aufweist. Durch diesen Kanal 106 kann über die erste Öffnung 108 und die zweite Öffnung 110 ein Gas strömen. Außerhalb des Kanals 106 ist das Wirkelement 82 aus gasdichtem Material hergestellt.

Durch den Kanal 106 ist ein "Automatikventil" bereitgestellt, welches je nach Position des Wirkelements 82 einen Fluidaustausch zwischen dem Vordruckraum 92 und dem Rückfederraum 88 ermöglicht bzw. nicht ermöglicht.

Bei der in Figur 3 gezeigten Stellung des Wirkelements 82 liegt die zweite Öffnung 110 in dem Vordruckraum 92 und die erste Öffnung 108 liegt in dem Rückfederraum 88. Dadurch kann ein Druckausgleich zwischen dem Vordruckraum 92 und dem Rückfederraum 88 erfolgen. Dadurch ist eine Steuerung des Drucks in dem Rückfederraum 88 über den Druck im Vordruckraum 92 möglich beispielsweise mit dem Ziel, eine variable Federkennlinie der Gasfeder des Rückfederraums 88 zu realisieren.

Es ist dadurch möglich, die Kennlinie räumlich definiert einzustellen (bezogen auf die Kolbenposition) und/oder zeitlich definiert einzustellen. Grundsätzlich lässt sich dadurch für jede Kolbenposition und für jeden Zeitpunkt eine bestimmte Federsteifigkeit einstellen.

Der Kanal 106 bildet ein Ventil, das nicht extern geschaltet werden muss, sondern es ist eine "Selbstregelung" realisiert. Wenn abhängig von der Position der ersten Öffnung 108 und der zweiten Öffnung 110 (und den geometrischen Abmessungen des Kanals 106) erreicht wird, dass die erste Öffnung 108 in dem Rückfederraum 88 liegt und die zweite Öffnung 110 in dem Vordruckraum 92 liegt, kann dort ein Druckausgleich erfolgen. Es ist dann kein Hochdruckventil für den Rückfederraum 88 notwendig. Weiterhin ist auch keine zeitliche Ventilsteuerung von außen mehr notwendig, da die Position des Wirkelements 82 den Druckausgleich selber steuert.

Wenn sowohl die erste Öffnung 108 als auch die zweite Öffnung 110 in dem Rückfederraum 88 liegen bzw. beide in dem Vordruckraum 92 liegen, dann kann kein Druckausgleich erfolgen.

Bei dem gezeigten Ausführungsbeispiel erfolgt ein Druckausgleich, wenn der Kolben 78 an oder in der Nähe eines Umkehrpunkts der Bewegung der Kolbeneinrichtung 76 liegen. Je nach Ausbildung des Kanals 106 mit seiner ersten Öffnung 108 und seiner zweiten Öffnung 110 ist dabei einstellbar, ob die fluidwirksame Verbindung zwischen dem Rückfederraum 88 und dem Vordruckraum 92 an oder in der Nähe des unteren Umkehrpunkts oder des oberen Umkehrpunkts liegt.

Durch die Lagerung und insbesondere Gleitlagerung des Wirkelements 82 an der Öffnung 98 und/oder an der Öffnung 102 hat der Kolben 78 keine Führungsaufgabe mehr. Er muss dann im Wesentlichen nur für die Dichtigkeit zwischen dem Expansionsraum 86 und dem Rückfederraum 88 sorgen.

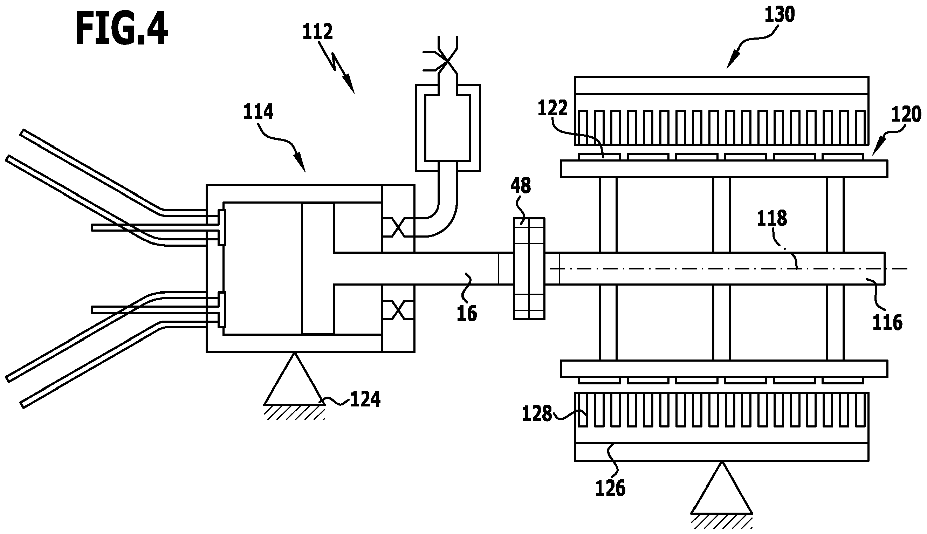

Bei einem Beispiel einer Freikolbenvorrichtung, welches in Figur 4 gezeigt und dort als Ganzes mit 112 bezeichnet ist, ist ein Antriebsteil 114 vorgesehen, wie es im Zusammenhang mit Figur 2 beschrieben wurde. Das Wirkelement 16 dieses Antriebsteils ist über die Kupplung 48 an einen Aktor 116 eines Lineartriebs gekoppelt. Der Aktor 116 ist über das Wirkelement 16 linear hin- und herverschieblich.

Der Aktor 116 bewegt sich in einem Magnetfeld und/oder erzeugt ein mit dem Aktor 116 bewegtes Magnetfeld. Dadurch lassen sich in Zusammenwirkung mit einem geeigneten Stator insbesondere Induktionsströme generieren.

Der Aktor 116 trägt beabstandet zu einer Längsachse 118 eine Magneteinrichtung 120, welche beispielsweise Permanentmagnete 122 umfasst, die eine in der Längsrichtung parallel zur Längsachse 118 alternierende Polung aufweisen.

Das Antriebsteil 114 ist ortsfest angeordnet. Dies ist in Figur 4 durch die Basis 124 angedeutet. Ebenfalls ortsfest angeordnet ist ein Stator 126, welcher mit dem Aktor 116 zusammenwirkt. Der Stator 126 umfasst beispielsweise Wicklungen 128. Die Magneteinrichtung 120 wird durch die Hin- und Herbewegung des Wirkelements 16 und die damit verursachte Hin- und Herbewegung des Aktors 116 relativ zum Stator 126 bewegt. Dadurch werden Ströme induziert, die abgreifbar sind. Der entsprechende Lineartrieb 130 wirkt als Lineargenerator, welcher elektrischen Strom bereitstellt. Die mechanische Energie, welche durch das Antriebsteil 114 erzeugt wird, lässt sich an dem Lineartrieb 130 in Strom wandeln.

Es ist aber auch grundsätzlich möglich, dass der Lineartrieb 130 zur Steuerung/Regelung der Kolbeneinrichtung des Antriebsteils 114 verwendet wird. Dies ist in der WO 03/091556 A1 beschrieben, auf die ausdrücklich Bezug genommen wird.

Der Lineartrieb 130 ist an das Wirkelement 16 angekoppelt. Es lassen sich auch andere Anwendungen zusätzlich oder alternativ ankoppeln.

Der Aktor 116 kann auch mit einem oder mehreren Elektromagneten versehen sein. Er kann Kurzschlusswindungen aufweisen. Es ist auch möglich, dass er eine "passive" Zahnstruktur aus magnetisch leitfähigem Material trägt.

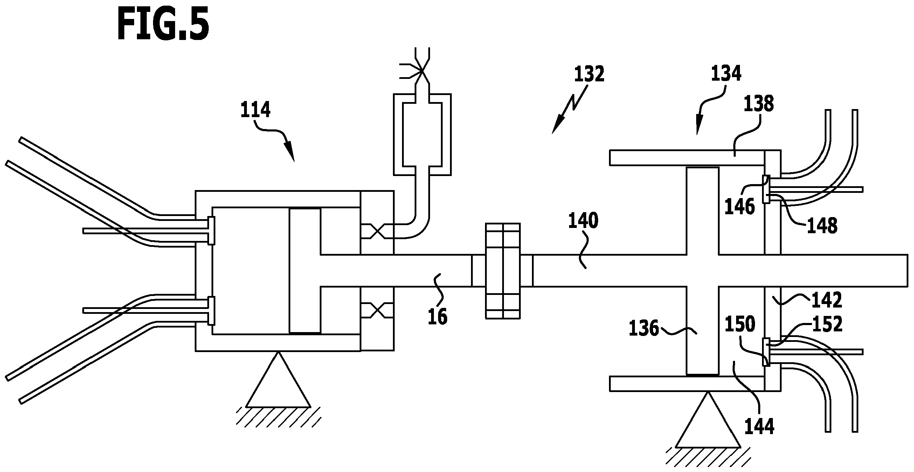

Bei einem Beispiel, welches in Figur 5 gezeigt und dort mit 132 bezeichnet ist, ist wiederum ein Antriebsteil 114 vorgesehen. An dessen Wirkelement 16 ist ein Verdichter 134 gekoppelt. Der Verdichter kann zum Verdichten von Gas oder einer Flüssigkeit dienen. Es kann sich beispielsweise um einen Verdichter für Kältemittel, Hydraulikverdichter oder Wasserverdichter (beispielsweise als Pumpe) handeln.

Das Wirkelement 16 ist an einen Kolben 136 des Verdichters gekoppelt, welcher in einem entsprechenden Zylinder 138 geführt ist. Das Wirkelement 16 ist direkt mit dem Kolben 136 oder mit einer Kolbenstange 140 verbunden, welche an dem Kolben 136 sitzt. Zwischen einer Stirnwand 142 und dem Kolben 140 ist ein Verdichterraum 144 gebildet. In diesen Verdichterraum 144 münden eine oder mehrere Einlassöffnungen 146, an denen entsprechend ein Steuerventil 148 sitzt. Über die Einlassöffnung 146 ist zu verdichtendes Medium einkoppelbar.

Ferner sitzen an der Stirnwand 142 eine oder mehrere Auslassöffnungen 150, an denen jeweils ein Steuerventil 152 sitzt. Verdichtetes Medium ist über eine Auslassöffnung abführbar.

Der in Figur 5 gezeigte Verdichter ist einstufig in dem Sinne, dass er nur einen Verdichterraum 144 aufweist.

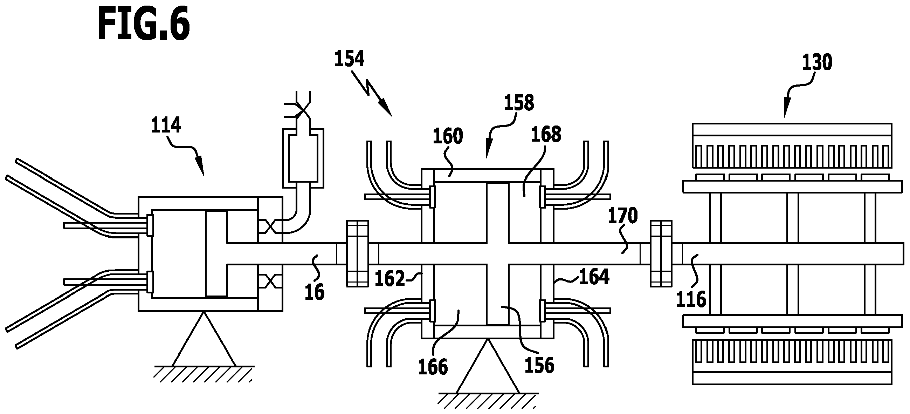

Bei einem Beispiel, welches in Figur 6 gezeigt und dort mit 154 bezeichnet ist, ist wiederum ein Antriebsteil 114 vorhanden, welches mit seinem Wirkelement 16 an einen Kolben 156 eines Verdichters 158 gekoppelt ist. Der Kolben 156 ist in einem Zylinder 160 angeordnet, welcher zu einer ersten Stirnwand 162 und zu einer zweiten Stirnwand 164 (bis auf Einlassöffnungen und Auslassöffnungen) geschlossen ist. In dem Zylinder 160 sind ein erster Verdichterraum 166 und ein zweiter Verdichterraum 168 gebildet. In diesem Sinne ist der Verdichter 158 einstufig. Sowohl im ersten Verdichterraum 166 als auch in dem zweiten Verdichterraum 168 lässt sich ein Medium verdichten. Man erhält dadurch den doppelten Wirksinn, da sowohl bei der Hinbewegung als auch bei der Herbewegung des Kolbens 156 ein entsprechender Verdichtungsvorgang möglich ist. Pulsationen lassen sich verringern. Es können unterschiedliche Verdichtungsmedien genutzt werden, um den Gesamtprozess zu optimieren. Auch der Bauraum lässt sich minimieren.

An dem ersten Verdichterraum 166 und dem zweiten Verdichterraum 168 sind jeweils eine oder mehrere Einlassöffnungen und eine oder mehrere Auslassöffnungen vorgesehen, um zu verdichtendes Medium einkoppeln zu können und verdichtetes Medium auskoppeln zu können.

Der Verdichter 158 ist in Reihe (seriell) mit dem Antriebsteil 114 geschaltet. Zusätzlich kann ein Lineartrieb, welcher beispielsweise wie der Lineartrieb 130 aufgebaut ist, in Reihe geschaltet werden. Dazu ist der entsprechende Aktor 116 dieses Lineartriebs an eine Kolbenstange 170 gekoppelt, an welcher der Kolben 156 sitzt. Die Kolbenstange 170 wiederum ist an das Wirkelement 16 gekoppelt.

Es ist auch möglich, mehrere Anwendungsteile parallel zu betreiben. In einem Ersatzschaltbild sind dabei die parallel betriebenen Anwendungsteile als Kombination seriell zum Antriebsteil 12 geschaltet.

Durch den Antriebsteil 114 der Freikolbenvorrichtung 154 wird das Wirkelement 16 in eine lineare Hin- und Herbewegung versetzt. Diese Bewegung wird durch die Ankoppelung auf die Kolbenstange 170 übertragen und auf den Aktor 116 übertragen. Über die Kolbenstange 170 wird der Verdichter 158 betrieben. Über den Aktor 116 wird an dem Lineartrieb 130 Strom erzeugt.

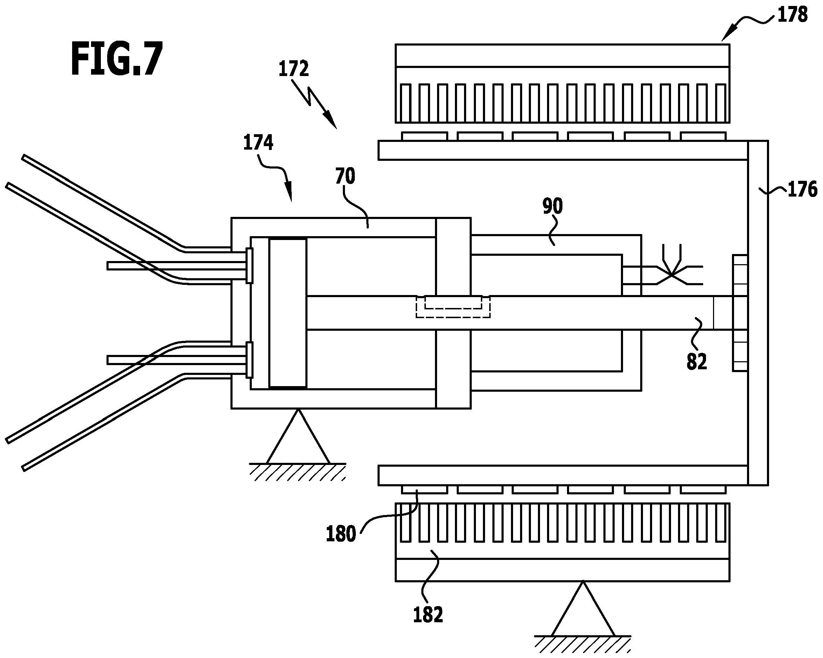

Bei einem zweiten Ausführungsbeispiel einer erfindungsgemäßen Freikolbenvorrichtung, welche in Figur 7 gezeigt und dort mit 172 bezeichnet ist, ist ein Antriebsteil 174 vorhanden, welches dem Antriebsteil gemäß Figur 3 entspricht. Das entsprechende Wirkelement 82 ist an einen Aktor 176 eines Lineartriebs 178 gekoppelt. Dieser Aktor 176 ist beispielsweise topfförmig ausgestaltet. Er umgibt die Vordruckkammer 90 und auch teilweise die Kolbenaufnahme 70. Dadurch lassen sich die Längenabmessungen der Freikolbenvorrichtung 172 mit Lineartrieb 178 gering halten. (Die Querabmessungen in Längsrichtung sind dadurch unter Umständen vergrößert.)

Der Aktor 176 trägt beispielsweise eine Magneteinrichtung 180. Diese wird durch das Wirkelement 82 relativ zu einem ortsfesten Stator 182 bewegt. Dadurch lässt sich Strom erzeugen.

Erfindungsgemäß wird eine Freikolbenvorrichtung bereitgestellt, bei der an einem Antriebsteil mechanische Energie abgreifbar ist. Dadurch ergibt sich ein modularer Aufbau. Es können Anwendungen wie beispielsweise ein oder mehrere Verdichter und ein oder mehrere Lineartriebe angekoppelt werden.

Es ist ferner vorgesehen, dass ein Expansionsraum und ein Rückfederraum direkt benachbart zueinander sind. Sie werden durch den gleichen Kolben mit gegenüberliegenden Flächen von diesem Kolben begrenzt. Dadurch ergibt sich ein kompakter Aufbau bezüglich der Länge.

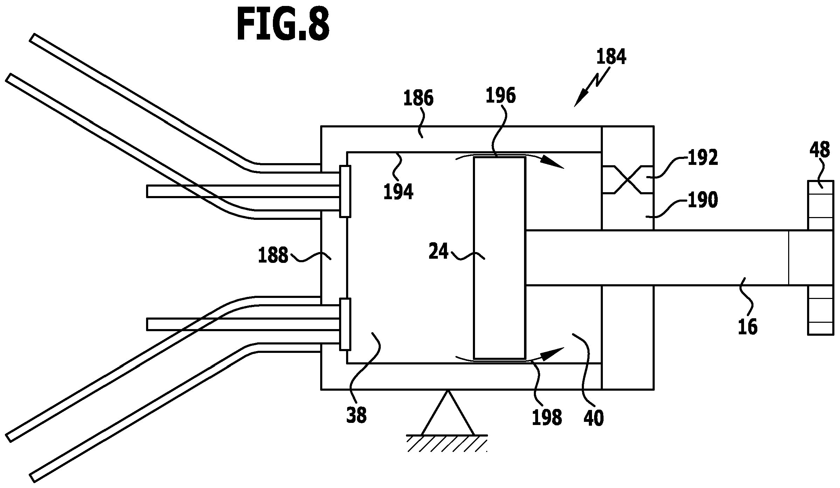

Bei einem Beispiel einer Freikolbenvorrichtung, welche in Figur 8 schematisch gezeigt und dort mit 184 bezeichnet ist, ist der Aufbau grundsätzlich gleich wie bei der Freikolbenvorrichtung 10. Für gleiche Elemente werden gleiche Bezugszeichen wie bei der Freikolbenvorrichtung 10 verwendet. Der Kolben 24 ist in einer Kolbenaufnahme 186 geführt, welche eine erste Stirnwand 188 und eine gegenüberliegende zweite Stirnwand 190 aufweist. An der zweiten Stirnwand 190, welche den Rückfederraum 40 begrenzt, ist (mindestens) ein Steuerventil 192 angeordnet. Bei der Freikolbenvorrichtung 184 ist der Rückfederraum 40 ein Gasfederraum. Über das Steuerventil 192 lässt sich Überschussgas aus dem Rückfederraum 40 ablassen.

Der Kolben 24 ist an einer Innenseite 194 der Kolbenaufnahme 186 geführt. Eine Führungsfläche 196 des Kolbens 24 ist seine der Kolbenaufnahme 186 zugewandte Kolbenumfangsfläche. Zwischen der Führungsfläche 196 und der Innenseite 194 liegen grundsätzlich Undichtigkeiten vor, durch die Fluid und insbesondere Gas aus dem Expansionsraum 38 in den Rückfederraum 40 gelangen kann. Dies ist in Figur 8 durch die Pfeile 198 angedeutet.

Wenn der Druck im Expansionsraum 38 höher ist als im Rückfederraum 40, dann wird Gas über die Undichtigkeiten aus dem Expansionsraum 38 in den Rückfederraum 40 gedrückt. Dies wird als Blowby bezeichnet. Dieser Blowby lässt sich dazu nutzen, den Druck im als Gasfederraum ausgebildeten Rückfederraum 40 aufrechtzuerhalten bzw. die Druckverluste dort zu verringern. Über das Steuerventil 192 lässt sich überschüssiges Gas aus dem Rückfederraum 40 abblasen.

Ansonsten funktioniert die Freikolbenvorrichtung 186 wie die Freikolbenvorrichtung 10.

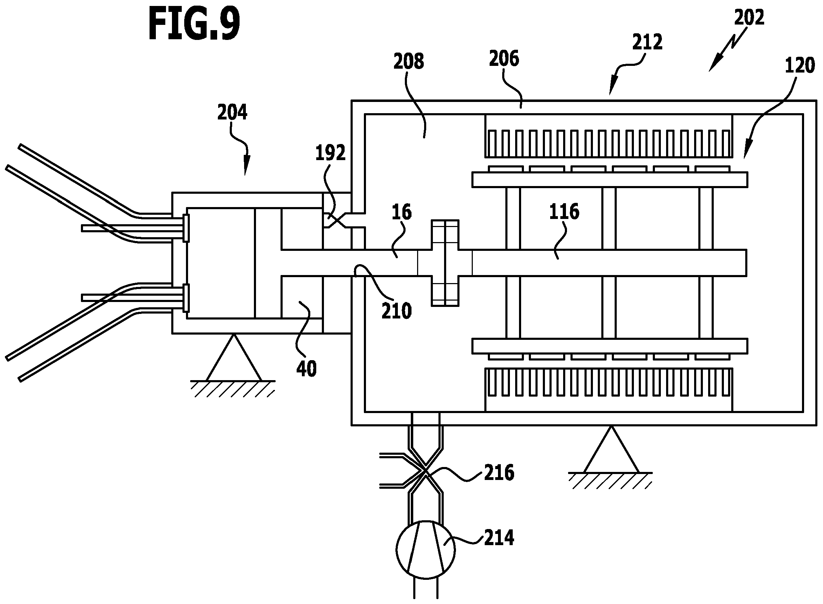

Bei einem Beispiel einer Freikolbenvorrichtung, welches in Figur 9 schematisch gezeigt und dort mit 202 bezeichnet ist, ist ein Antriebsteil 204, welches dem Antriebsteil der Freikolbenvorrichtung 184 entspricht, an eine Vordruckkammer 206 angeschlossen. Das mindestens eine Steuerventil 192 steht in fluidwirksamer Verbindung mit einem Vordruckraum 208 der Vordruckkammer 206. Das mindestens eine Steuerventil 192 ist dabei bidirektional oder es sind unterschiedliche unidirektionale Steuerventile vorgesehen, um einen bidirektionalen Druckaustausch zwischen dem Rückfederraum 40 des Antriebsteils 204 und dem Vordruckraum 208 zu ermöglichen.

Die Vordruckkammer 206 weist eine Öffnung 210 auf, durch welche das Wirkelement 16 des Antriebsteils 204 durchgetaucht ist. An der Öffnung 210 ist das Wirkteil 16 gelagert und insbesondere gleitverschieblich gelagert. Diese Öffnung ist abgedichtet. Innerhalb des Vordruckraums 208 ist eine Magneteinrichtung angeordnet, welche der Magneteinrichtung 120 entspricht. Es werden deshalb gleiche Bezugszeichen verwendet. Das Wirkelement 16 ist dann an einen Aktuator 116 angeschlossen. Der Aktuator 116 liegt ebenfalls im Vordruckraum 208.

Die Vordruckkammer 206 nimmt die Magneteinrichtung auf. Sie ist stationär angeordnet. Sie bildet als Ganzes ein Anwendungsteil 212, an welchem das Antriebsteil 204 angeschlossen ist.

An den Vordruckraum 208 ist eine Pumpe 214 angeschlossen, über welche sich ein definierter Druck in dem Vordruckraum 208 einstellen lässt. Die Pumpe 214 ist beispielsweise über ein Dreiwegeventil 216 angeschlossen.

Über die Pumpe 214 wird der Druck im Vordruckraum 208 eingestellt. Mittels des Steuerventils 192 lässt sich über den Druck im Vordruckraum 208 der Druck im Rückfederraum 40 einstellen.

Mittels der Magneteinrichtung 120 lässt sich über die Bewegung des Wirkteils 16 ein elektrischer Strom erzeugen.

Ansonsten funktioniert die Freikolbenvorrichtung 202 wie oben im Zusammenhang mit den anderen Ausführungsbeispielen beschrieben.

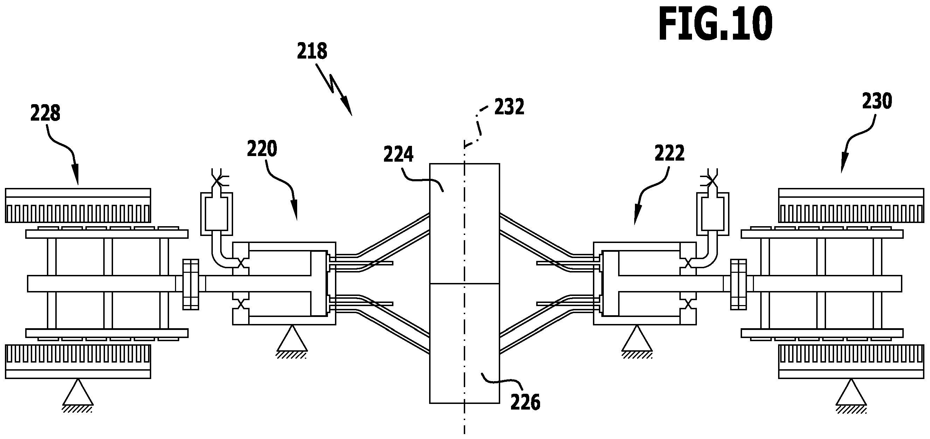

Ein Beispiel, welches in Figur 10 schematisch gezeigt und dort mit 218 bezeichnet ist, umfasst ein erstes Antriebsteil 220 und ein zweites Antriebsteil 222. Diese Antriebsteile 220, 222 sind beispielsweise so ausgebildet wie das oben beschriebene Antriebsteil 114.

Das erste Antriebsteil 220 und das zweite Antriebsteil 222 sind beispielsweise spiegelsymmetrisch zu einander angeordnet. Ihnen ist eine gemeinsame Zuführungseinrichtung 224 für ein Brennstoff-Oxidator-Gemisch und eine gemeinsame Abführungseinrichtung 226 für Abgas zugeordnet. Dadurch ist ein Doppelsystem gebildet.

An das erste Antriebsteil 220 ist ein erstes Anwendungsteil 228 angeschlossen und an das zweite Antriebsteil 222 ist ein zweites Anwendungsteil 230 angeschlossen. Beispielsweise entsprechen die Anwendungsteile 228 und 230 dem oben beschriebenen Lineartrieb 130.

Die Anordnung ist vorzugsweise symmetrisch zu einer Mittelebene 232. Dadurch lässt sich ein Massengleich in dem Doppelsystem der Antriebsteile und Anwendungsteile 220-228 und 222-230 erreichen.

Die Antriebsteile 220, 222 und die Anwendungsteile 228, 230 funktionieren wie oben beschrieben.

### Bezugszeichenliste

- 10: Freikolbenvorrichtung
- 12: Antriebsteil
- 14: Anwendungsteil
- 16: Wirkelement
- 18: Kolbenaufnahme
- 20: Kolbeneinrichtung
- 22: Kolbenraum
- 24: Kolben
- 26: Richtung
- 28: Längsachse
- 30: erste Kolbenfläche
- 32: zweite Kolbenfläche
- 34: erste Stirnwand
- 36: zweite Stirnwand
- 38: Expansionsraum
- 40: Rückfederraum
- 41: Federelement
- 42: Kolbenstange
- 44: Öffnung
- 46: Lagereinrichtung
- 48: Kupplung
- 50: Einlassöffnung
- 51: Einspritzventil
- 52: Ventil
- 53: Drucksensor
- 54: Auslassöffnung
- 55: Drucksensor
- 56: Ventil
- 57: Zündeinrichtung
- 58: zweite Ausführungsform
- 60: Vordruckkammer
- 62: Vordruckraum
- 64: zweite Stirnseite
- 66: Ventil
- 67: Pumpe
- 68: dritte Ausführungsform
- 70: Kolbenaufnahme
- 72: erste Stirnseite
- 74: zweite Stirnseite
- 76: Kolbeneinrichtung
- 78: Kolbeneinrichtung
- 80: Kolbenstange
- 82: Ventilelement
- 84: Kupplung
- 86: Expansionsraum
- 88: Rückfederraum
- 90: Vordruckkammer
- 92: Vordruckraum
- 94: erste Stirnseite
- 96: zweite Stirnseite
- 98: Öffnung
- 100: Stirnwand
- 102: Öffnung
- 104: Öffnung
- 106: Kanal
- 108: erste Öffnung
- 110: zweite Öffnung
- 112: vierte Ausführungsform
- 114: Antriebsteil
- 116: Aktor
- 118: Längsachse
- 120: Magneteinrichtung
- 122: Magnete
- 124: Basis
- 126: Stator
- 128: Wicklung
- 130: Linearantrieb
- 132: fünfte Ausführungsform
- 134: Verdichter
- 136: Kolben
- 138: Zylinder
- 140: Kolben
- 142: Stirnwand
- 144: Verdichterraum
- 146: Einlassöffnung
- 148: Steuerventil
- 150: Auslassöffnung
- 152: Steuerventil
- 154: sechste Ausführungsform
- 156: Kolben
- 158: Verdichter
- 160: Zylinder
- 162: erste Stirnwand
- 164: zweite Stirnwand
- 166: erster Verdichterraum
- 168: zweiter Verdichterraum
- 170: Kolbenstange
- 172: siebte Ausführungsform
- 174: Antriebsteil
- 176: Aktor
- 178: Linearantrieb
- 180: Magneteinrichtung
- 182: Stator
- 184: achte Ausführungsform
- 186: Kolbenaufnahme
- 188: erste Stirnwand
- 190: zweite Stirnwand
- 192: Steuerventil
- 194: Innenseite
- 196: Führungsfläche
- 198: Pfeil
- 202: neunte Ausführungsform
- 204: Antriebsteil
- 206: Vordruckkammer
- 208: Vordruckraum
- 210: Öffnung
- 212: Anwendungsteil
- 214: Pumpe
- 216: Dreiwegeventil
- 218: zehnte Ausführungsform
- 220: erstes Antriebsteil
- 222: zweites Antriebsteil
- 224: Zuführungseinrichtung
- 226: Abführungseinrichtung
- 228: erstes Anwendungsteil
- 230: zweites Anwendungsteil
- 232: Mittelebene

## Patentansprüche

1. Freikolbenvorrichtung, umfassend mindestens eine Kolbenaufnahme (18; 70), mindestens eine in der entsprechenden Kolbenaufnahme (18; 70) linear bewegliche Kolbeneinrichtung (20; 76) mit einer ersten Kolbenfläche (30) und einer zweiten Kolbenfläche (32), welche der ersten Kolbenfläche (30) abgewandt ist, und einen in der Kolbenaufnahme (18; 70) angeordneten Expansionsraum (38; 86), welcher durch die erste Kolbenfläche (30) begrenzt ist, wobei die Kolbeneinrichtung (20; 76) unter der Wirkung eines Mediums, welches in dem Expansionsraum (38; 86) expandiert, antreibbar ist, ein in der mindestens einen Kolbenaufnahme (18; 70) angeordneter Rückfederraum (40; 88) durch die zweite Kolbenfläche (32) begrenzt ist und dass der Rückfederraum (88) mit mindestens einer Vordruckkammer (90) fluidwirksam verbunden ist,
**dadurch gekennzeichnet, dass**
die mindestens eine Kolbenaufnahme (18; 70) eine Seite (64) aufweist, aus welcher ein mit der Kolbeneinrichtung (20; 76) verbundenes mindestens eines lineares bewegliches Wirkelement (16; 82) herausgeführt ist, dass das mindestens eine Wirkelement (16; 82) eine Kolbenstange (42; 80) ist, dass mindestens ein Wirkelement (82) durch die mindestens eine Vordruckkammer (90) geführt ist, und dass in dem mindestens einen Wirkelement (82) mindestens ein Kanal (106) angeordnet ist, welcher eine erste Öffnung (108) und eine zweite Öffnung (110) aufweist, wobei die Position der ersten Öffnung (108) und der zweiten Öffnung (110) in dem Rückfederraum (88) und/oder einem Vordruckraum (92) der Vordruckkammer (90) abhängig von der Position des mindestens einen Wirkelements (82) ist.

2. Freikolbenvorrichtung nach Anspruch 1, **dadurch gekennzeichnet, dass** der Expansionsraum (38; 86) und der Rückfederraum (40; 88) linear hintereinander angeordnet sind.

3. Freikolbenvorrichtung nach Anspruch 1 oder 2, **dadurch gekennzeichnet, dass** der Expansionsraum (38; 86) und der Rückfederraum (40; 88) durch einen Kolben (24; 78) der Kolbeneinrichtung (20; 76) getrennt sind, welcher die erste Kolbenfläche (30) und die zweite Kolbenfläche (32) aufweist.

4. Freikolbenvorrichtung nach einem der vorangehenden Ansprüche, **dadurch gekennzeichnet, dass** sich eine Innenlänge der Kolbenaufnahme (18; 70) zusammensetzt aus einer Länge des Expansionsraums (38; 86), eines Abstands zwischen der ersten Kolbenfläche (30) und der zweiten Kolbenfläche (32) und einer Länge des Rückfederraums (40; 88).

5. Freikolbenvorrichtung nach Anspruch 4, **dadurch gekennzeichnet, dass** der Abstand zwischen der ersten Kolbenfläche (30) und der zweiten Kolbenfläche (32) höchstens 30 % der gesamten Innenlänge der Kolbenaufnahme (18; 70) beträgt.

6. Freikolbenvorrichtung nach einem der vorangehenden Ansprüche, **dadurch gekennzeichnet, dass** die Seite eine Stirnseite (64) ist, welche quer zur Bewegungsrichtung (26) der Kolbeneinrichtung (20; 76) orientiert ist, und insbesondere dass an der Seite (64) eine Wand (36; 100) angeordnet ist, welche der zweiten Kolbenfläche (32) gegenüberliegt, und insbesondere dass die Wand (36; 100) eine Öffnung (44; 102) aufweist, durch welche das mindestens eine Wirkelement (16; 82) geführt ist.

7. Freikolbenvorrichtung nach einem der vorangehenden Ansprüche, **dadurch gekennzeichnet, dass** der Rückfederraum (40; 88) ein Gasfederraum ist, in welchem ein kompressibles Medium aufgenommen ist.

8. Freikolbenvorrichtung nach einem der vorangehenden Ansprüche, **gekennzeichnet durch** eine Steuerungseinrichtung zur Steuerung der Verbindung.

9. Freikolbenvorrichtung nach einem der vorangehenden Ansprüche, **dadurch gekennzeichnet, dass** die mindestens eine Vordruckkammer (90) über eine Stirnseite (74) der Kolbenaufnahme (70) mit dem Rückfederraum (88) verbunden ist.

10. Freikolbenvorrichtung nach einem der vorangehenden Ansprüche, **dadurch gekennzeichnet, dass** in einer oder mehreren Positionen der Kolbeneinrichtung (76) der Vordruckraum (92) und der Rückfederraum (88) über den Kanal (106) in fluidwirksamer Verbindung stehen.

11. Freikolbenvorrichtung nach Anspruch 10, **dadurch gekennzeichnet, dass** die Position oder Positionen ein Umkehrpunkt oder Punkt in der Nähe eines Umkehrpunkts der Kolbeneinrichtung (76) sind.

12. Freikolbenvorrichtung nach einem der vorangehenden Ansprüche, **dadurch gekennzeichnet, dass** in der Vordruckkammer (206) eine Anwendung angeordnet ist, welche an das Wirkelement (16) gekoppelt ist.

13. Freikolbenvorrichtung nach einem der vorangehenden Ansprüche, **dadurch gekennzeichnet, dass** an die Kolbeneinrichtung (20; 76) mindestens ein Lineartrieb (130; 178) anschließbar oder angeschlossen ist, und insbesondere dass der mindestens eine Lineartrieb (130; 178) einen Stator (126; 182) und einen Aktor (116; 176) aufweist, welche mit mindestens einem Wirkelement (16; 82) der Kolbeneinrichtung (20; 76) verbunden sind.

14. Freikolbenvorrichtung nach Anspruch 13, **dadurch gekennzeichnet, dass** der mindestens eine Lineartrieb (130; 178) in einer Richtung parallel zur Bewegungsrichtung (26) der Kolbeneinrichtung (20; 76) auf die Kolbenaufnahme (18; 70) folgt, und insbesondere dass der mindestens eine Lineartrieb (178) die mindestens eine Kolbenaufnahme (18; 70) und/oder eine Vordruckkammer (60; 90) mindestens teilweise umgibt.

15. Freikolbenvorrichtung nach einem der vorangehenden Ansprüche, **dadurch gekennzeichnet, dass** an die Kolbeneinrichtung (20; 76) mindestens ein Verdichter (134; 158) anschließbar oder angeschlossen ist, und insbesondere dass eine Kolbenstange des mindestens einen Verdichters (134; 158) mit einem Wirkelement (16; 82) der Kolbeneinrichtung (20; 76) verbunden ist.

## Claims

1. Free piston device, comprising at least one piston receptacle (18; 70), at least one linearly movable piston device (20; 76) in the corresponding piston receptacle (18; 70) with a first piston surface (30) and a second piston surface (32), which faces away from the first piston surface (30), and an expansion space (38; 86) provided within the piston receptacle (18; 70) and bounded by the first piston surface (30), wherein the piston device (20; 76) is drivable under the action of a medium which expands in the expansion space (38; 86), a return spring space (40; 88) arranged in the at least one piston receptacle (18; 70) and bounded by the second piston surface (32), and the return spring space (88) being fluid-effectively connected to at least one pre-pressure chamber (90),
**characterized in that**
the at least one piston receptacle (18; 70) has a side (64) from which at least one linearly movable active element (16; 82) connected to the piston device (20; 76) is led out, **in that** the at least one active element (16; 82) comprises a piston rod (42; 80), **in that** at least one active element (82) is guided through the at least one pre-pressure chamber (90), and that at least one duct (106) is arranged in the at least one active element (82) which has a first opening (108) and a second opening (110),wherein the position of the first opening (108) and the second opening (110) in the return spring chamber (88) and/or a pre-pressure space (92) of the pre-pressure chamber (90) is dependent on the position of the at least one active element (82).

2. Free piston device of claim 1, **characterized in that** the expansion chamber (38; 86) and the return spring chamber (40; 88) are arranged linearly one behind the other.

3. Free piston device of claim 1 or 2, **characterized in that** the expansion space (38; 86) and the return spring space (40; 88) are separated by a piston (24; 78) of the piston device (20; 76) having the first piston surface (30) and the second piston surface (32).

4. Free piston device of one of the preceding claims, **characterized in that** an inner length of the piston receptacle (18; 70) is composed of a length of the expansion space (38; 86), a distance between the first piston surface (30) and the second piston surface (32) and a length of the return spring space (40; 88).

5. Free piston device of claim 4, **characterized in that** the distance between the first piston surface (30) and the second piston surface (32) is at most 30% of the total inner length of the piston seat (18; 70).

6. Free piston device of one of the preceding claims, **characterized in that** the side is an end face (64) which is oriented transversely to the direction of movement (26) of the piston device (20; 76), and in particular that a wall (36; 100) is arranged on the side (64) which faces the second piston surface (32), and in particular that the wall (36; 100) has an opening (44; 102) through which the at least one active element (16; 82) is guided.

7. Free piston device of one of the preceding claims, **characterized in that** the return spring chamber (40; 88) is a gas spring chamber in which a compressible medium is received.

8. Free piston device of one of the preceding claims, **characterized by** a control device for controlling the connection.

9. Free piston device of one of the preceding claims, **characterized in that** the at least one pre-pressure chamber (90) is connected to the return spring chamber (88) via an end face (74) of the piston receptacle (70).

10. Free piston device of one of the preceding claims, **characterized in that** in one or more positions of the piston device (76) the pre-pressure space (92) and the return spring chamber (88) are in fluid-effective connection via the channel (106).

11. Free piston device of claim 10, **characterized in that** the position or positions are a reversal point or point near a reversal point of the piston device (76).

12. Free piston device of one of the preceding claims, **characterized in that** an application which is coupled to the active element (16) is arranged in the pre-pressure chamber (206).

13. Free piston device of one of the preceding claims, **characterized in that** at least one linear drive (130; 178) can be connected or is connected to the piston device (20; 76), and in particular that the at least one linear drive (130; 178) has a stator (126; 182) and an actuator (116; 176) which are connected to at least one active element (16; 82) of the piston device (20; 76).

14. Free piston device of claim 13, **characterized in that** the at least one linear drive (130; 178) follows the piston receptacle (18; 70) in a direction parallel to the direction of movement (26) of the piston device (20; 76), and in particular that the at least one linear drive (178) at least partially surrounds the at least one piston seat (18; 70) and/or a pre- pressure chamber (60; 90).

15. Free piston device according to one of the preceding claims, **characterized in that** at least one compressor (134; 158) can be connected or is connected to the piston device (20; 76), and in particular that a piston rod of the at least one compressor (134; 158) is connected to an active element (16; 82) of the piston device (20; 76).

## Revendications

1. Dispositif à piston libre, comprenant au moins un logement de piston (18 ; 70), au moins un moyen de piston (20 ; 76) déplaçable linéairement dans le logement de piston correspondant (18 ; 70), avec une première surface de piston (30) et une deuxième surface de piston (32) qui est opposée à la première surface de piston (30), et un espace d'expansion (38 ; 86) disposé dans le logement de piston (18 ; 70), qui est limité par la première surface de piston (30), le moyen de piston (20 ; 76) pouvant être entraîné sous l'effet d'un fluide qui se détend dans l'espace d'expansion (38 ; 86), un espace de ressort de rappel (40 ; 88) disposé dans l'au moins un logement de piston (18 ; 70) étant limité par la deuxième surface de piston (32) et que l'espace de ressort de rappel (88) est connecté fluidiquement à au moins une chambre de précompression (90),
**caractérisé en ce que** l'au moins un logement de piston (18 ; 70) présente un côté (64) hors duquel est guidé au moins un élément fonctionnel linéaire déplaçable (16 ; 82) connecté au moyen de piston (20 ; 76), **en ce que** l'au moins un élément fonctionnel (16 ; 82) est une tige de piston (42 ; 80), **en ce qu'**au moins un élément fonctionnel (82) est guidé à travers l'au moins une chambre de précompression (90), et **en ce que** dans l'au moins un élément fonctionnel (82) est disposé au moins un conduit (106) qui présente une première ouverture (108) et une deuxième ouverture (110), la position de la première ouverture (108) et de la deuxième ouverture (110) dans l'espace de ressort de rappel (88) et/ou dans un espace de précompression (92) de la chambre de précompression (90) dépendant de la position de l'au moins un élément fonctionnel (82).

2. Dispositif à piston libre selon la revendication 1, **caractérisé en ce que** l'espace d'expansion (38 ; 86) et l'espace de ressort de rappel (40 ; 88) sont disposés linéairement l'un derrière l'autre.

3. Dispositif à piston libre selon la revendication 1 ou 2, **caractérisé en ce que** l'espace d'expansion (38 ; 86) et l'espace de ressort de rappel (40 ; 88) sont séparés par un piston (24 ; 78) du moyen de piston (20 ; 76), qui présente la première surface de piston (30) et la deuxième surface de piston (32).

4. Dispositif à piston libre selon l'une quelconque des revendications précédentes, **caractérisé en ce qu'**une longueur intérieure du logement de piston (18 ; 70) se compose d'une longueur de l'espace d'expansion (38 ; 86), d'une distance entre la première surface de piston (30) et la deuxième surface de piston (32) et d'une longueur de l'espace de ressort de rappel (40 ; 88).

5. Dispositif à piston libre selon la revendication 4, **caractérisé en ce que** la distance entre la première surface de piston (30) et la deuxième surface de piston (32) vaut au maximum 30 % de la longueur intérieure totale du logement de piston (18 ; 70).

6. Dispositif à piston libre selon l'une quelconque des revendications précédentes, **caractérisé en ce que** le côté est un côté frontal (64) qui est orienté transversalement à la direction de déplacement (26) du moyen de piston (20 ; 76), et en particulier **en ce qu'**au niveau du côté (64) est disposée une paroi (36 ; 100) qui est opposée à la deuxième surface de piston (32), et en particulier **en ce que** la paroi (36 ; 100) présente une ouverture (44 ; 102) à travers laquelle est guidé l'au moins un élément fonctionnel (16 ; 82).

7. Dispositif à piston libre selon l'une quelconque des revendications précédentes, **caractérisé en ce que** l'espace de ressort de rappel (40 ; 88) est un espace de ressort à gaz, dans lequel est reçu un milieu compressible.

8. Dispositif à piston libre selon l'une quelconque des revendications précédentes, **caractérisé par** un dispositif de commande pour commander la connexion.

9. Dispositif à piston libre selon l'une quelconque des revendications précédentes, **caractérisé en ce que** l'au moins une chambre de précompression (90) est connectée par le biais d'un côté frontal (74) du logement de piston (70) à l'espace de ressort de rappel (88).

10. Dispositif à piston libre selon l'une quelconque des revendications précédentes, **caractérisé en ce que** dans une ou plusieurs positions du moyen de piston (76), l'espace de précompression (92) et l'espace de ressort de rappel (88) sont en liaison fluidique par le biais du conduit (106).

11. Dispositif à piston libre selon la revendication 10, **caractérisé en ce que** la position ou les positions sont un point d'inversion ou un point à proximité d'un point d'inversion du moyen de piston (76).

12. Dispositif à piston libre selon l'une quelconque des revendications précédentes, **caractérisé en ce que** dans la chambre de précompression (206) est disposé un agencement qui est accouplé à l'élément fonctionnel (16).

13. Dispositif à piston libre selon l'une quelconque des revendications précédentes, **caractérisé en ce qu'**au moins un entraînement linéaire (130 ; 178) peut être raccordé ou est raccordé au moyen de piston (20 ; 76), et en particulier **en ce que** l'au moins un entraînement linéaire (130 ; 178) présente un stator (126 ; 182) et un actionneur (116 ; 176) qui sont connectés à au moins un élément fonctionnel (16 ; 82) du moyen de piston (20 ; 76).

14. Dispositif à piston libre selon la revendication 13, **caractérisé en ce que** l'au moins un entraînement linéaire (130 ; 178), dans une direction parallèle à la direction de déplacement (26) du moyen de piston (20 ; 76) suit le logement de piston (18 ; 70), en particulier **en ce que** l'au moins un entraînement linéaire (178) entoure au moins partiellement l'au moins un logement de piston (18 ; 70) et/ou une chambre de précompression (60 ; 90).

15. Dispositif à piston libre selon l'une quelconque des revendications précédentes, **caractérisé en ce qu'**au moins un compresseur (134 ; 158) peut être raccordé ou est raccordé au moyen de piston (20 ; 76), et en particulier **en ce qu'**une tige de piston de l'au moins un compresseur (134 ; 158) est connectée à un élément fonctionnel (16 ; 82) du moyen de piston (20 ; 76).
